# EUROPÄISCHE PATENTSCHRIFT

(11) **EP 1 533 492 B1**
(45) Veröffentlichungstag und Bekanntmachung des Hinweises auf die Patenterteilung: **27.12.2006**
(21) Anmeldenummer: 03104300.3
(22) Anmeldetag: 21.11.2003
(51) Int. Cl.: F02B 39/00, F02B 37/02

(54) **Flüssigkeitsgekühlter Abgasturbolader**
Fluid cooled turbocharger
Turbocompresseur refroidi par un liquide

(43) Veröffentlichungstag der Anmeldung: 25.05.2005
(73) Patentinhaber: Ford Global Technologies, LLC, A subsidary of Ford Motor Company, Dearborn, MI 48126 (US)
(72) Erfinder: Walder, Karl, 51688, Wipperfuerth (DE); Stoffels, Harald, 50733 Köln (DE)
(74) Vertreter: Drömer, Hans-Carsten

(56) Entgegenhaltungen:
- DE-A- 10 022 052
- US-A- 3 948 052
- US-A- 5 528 902

## Beschreibung

Die Erfindung betrifft einen Abgasturbolader für Verbrennungsmotoren nach dem Oberbegriff von Anspruch 1.

Derartige Abgasturbolader sind insbesondere als Zwillingsstrom-Abgasturbolader bekannt. Damit sich einzelne Zylinder bei einem Ladungswechsel nicht gegenseitig beeinflussen, werden z. B. bei einem Sechszylindermotor je drei Zylinder durch eine Abgassammelleitung zusammengefaßt. Bei einem Vierzylindermotor werden je zwei Zylinder durch eine Abgassammelleitung zusammengefaßt. Mittels der Zwillingsstromturbinen werden die Abgasströme auch innerhalb der Turbine getrennt geführt. Im PKW-Motor werden in der Regel einteilige Abgaskrümmer und einflutige Turbinengehäuse eingesetzt. Zwillingsstrom-Abgasturbolader werden verwendet um auslöschende Effekte der Auspuffgasdruckimpulse zu vermeiden. Dadurch wird eine verbesserte Turboladerreaktion und -leistung erreicht. Die Zunge in dem Schneckenkanal ist allerdings sehr dünn und wird thermisch sehr hoch belastet. Von daher ist als Hauptnachteil der bekannten Zwillingsstrom-Abgasturbolader anzusehen, daß eine Abgastemperatur wegen der sehr dünnen Zunge auf ca. 950°C begrenzt ist.

Eine Möglichkeit die Abgastemperatur zu steigern, ist darin zu sehen, daß höherwertige Werkstoffe, insbesondere hitzebeständige austenitische Stahlgüsse verwendet werden. Diese sind jedoch sehr teuer in der Anschaffung und schwierig zu verarbeiten.

In der DE 39 36 171 A1 ist ein Auspuffkrümmer für Brennkraftmaschinen insbesondere für Otto-Motoren mit Abgasturbo-Aufladung offenbart. Der Abgasturbolager weist gegenflutig angeordnete Sammelleitungen auf. Die Sammelleitungen stehen über Krümmer mit teilweise gemeinsamer Trennwand mit einem Anschlußflansch in Verbindung. Die Trennwand steht mit einer an der Außenkontur des Auspuffkrümmers angeordneten Kühlrippe in Verbindung. In der Trennwand und der Kühlrippe ist eine Kammer zur Aufnahme eines Kühlmittels angeordnet.

Der vorliegenden Erfindung liegt die Aufgabe zugrunde, einen verbesserten Abgasturbolader der eingangs genannten Art zur Verfügung zu stellen, der mit einfachen Mitteln mit einer erheblich gesteigerten Abgastemperatur betrieben werden kann.

Erfindungsgemäß wird die Aufgabe durch einen Abgasturbolader mit den Merkmalen des Anspruchs 1 gelöst.

Somit wird die Zunge selbst gekühlt. Durch die Kühlung der Zunge selbst kann eine Abgastemperatur von ca. 1050°C erreicht werden.

Üblicher Weise ist die Zunge mit dem Schneckenkanal einstückig hergestellt und weist eine im Querschnitt gesehen pfeilspitzenartige Grundfläche auf. Zur Wärmeabfuhr ist es daher günstig, wenn der Hohlraum im Querschnitt gesehen oval ausgestaltet ist, wobei die jeweiligen abgerundeten Enden des Hohlraums zum einen etwas in die Wandung des Schneckenkanals und zum anderen in die Zunge hineingeführt sind. Insbesondere der, wegen des spitzen Zulaufs der Zunge ausgebildete, "hot spot" an der Spitze der Zunge wird somit erfolgreich abgekühlt, so daß auch der Verschleiß verringert wird.

Damit die Wärmeableitung von der Zunge zur Wandung des Schneckenkanals gesteuert bzw. bestimmt werden kann ist in dem Hohlraum ein Kühlmittel eingeschlossen, daß seinen Aggregatzustand bei Erwärmung ändert. Zweckmäßig ist daher, wenn als Kühlmittel vorzugsweise Natrium verwendet wird.

Das Kühlmittel wird dabei in den Hohlraum gefüllt, bevor der Schneckenkanal z. B. mittels Schweißen z. B. an der Auspuffkrümmereinlaßseite verschlossen wird.

Zweckmäßig ist, wenn das Gehäuse mit dem Schneckenkanal und der Zunge einstückig hergestellt ist, vorzugsweise Gießtechnisch hergestellt ist. Der Hohlraum wird bei dem Gießprozeß vorzugsweise gleichzeitig eingeformt.

Damit ist ein in sich geschlossenes Kühlsystem gebildet. Das Kühlmittel wird in dem Hohlraum aufgrund von Motorvibrationen in Bewegung gehalten. Das Kühlmittel fließt demnach in dem Hohlraum und transportiert die Wärme der Zunge zu der Wandung des Schneckenkanals. Der Hohlraum ist daher zweckmäßig als Kühlmittelkanal ausgestaltet.

Weitere vorteilhafte Ausgestaltungen der Erfindung sind den Unteransprüchen und der folgenden Beschreibung zu entnehmen. Es zeigen:
- Fig. 1: einen Abgasturbolader mit einer Zwillingsstromturbine in einer Frontansicht,
- Fig. 2: einen Schneckenkanal als Einzelheit entlang eines Querschnittes A aus Figur 1.

Bei den unterschiedlichen Figuren sind gleiche Teile stets mit denselben Bezugszeichen versehen, weswegen sie in der Regel auch nur einmal beschrieben werden.

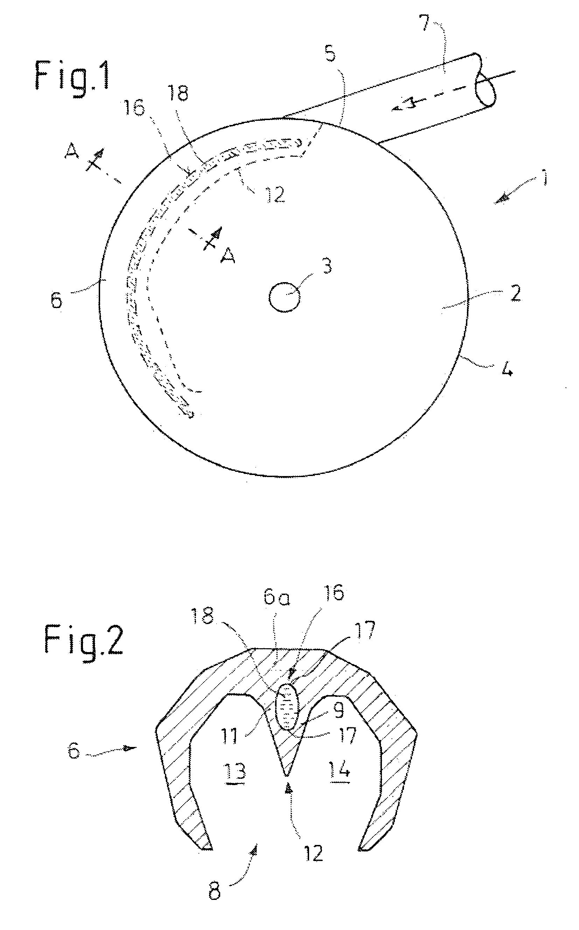

Figur 1 zeigt einen Zwillingsstrom-Abgasturbolader 1 mit einer Turbine 2. Die Turbine 2 weist eine Welle 3 auf und ist in einem Gehäuse 4 angeordnet, das einen Schneckenkanal 6 aufweist. Der Schneckenkanal 6 ist mit einem Auspuffkrümmer 7 an einer Auspuffkrümmereinlaßseite 5 verbunden. In dem dargestellten Ausführungsbeispiel ist allerdings ein Zwillingsstrom-Abgasturbolader 1 eines Vierzylindermotors gezeigt. Bei diesem sind die in der Zündreihenfolge 1 und 4 sowie 2 und 3 zündenden Zylinder jeweils einer Abgassammelleitung zugeordnet. Das bedeutet, daß die Abgase der Zylinder 1 und 4 in einer Abgassammelleitung und die Abgase der Zylinder 2 und 3 in einer anderen Abgassammelleitung zusammengeführt werden, die jeweils dem Auspuffkrümmer 7 zugeführt werden.

Bei dem dargestellten bevorzugten Ausführungsbeispiel ist ein einteiliger Auspuffkrümmer 7 und ein zweiflutiges Gehäuse 4 gezeigt. Dadurch kann die jeweilige Sammelleitung kompakter gebaut werden, wobei der Zwillingsstrom-Abgasturbolader 1 näher an einem Zylinderkopf positioniert werden kann.

Der Schneckenkanal 6 weist eine Wandung 6a und eine Abgasöffnung 8 auf. Durch die Abgasöffnung 8 werden die Abgase des Verbrennungsmotors der Zwillingsstromturbine 2 zugeführt.

In dem Schneckenkanal 6 ist eine Zunge 9 angeordnet. Die Zunge 9 weist eine pfeilspitzenartige Grundfläche 11 auf (Figur 2). Mit ihrer Spitze 12 ist die Zunge 9 in Richtung zur Turbine 2 orientiert und ragt etwas in die Abgasöffnung 8 hinein, und bildet so über die Turbine zwei axial getrennte Räume 13 bzw. 14 in dem Schneckenkanal 6, die radial um die Zwillingsstromturbine 2 herum verlaufen. Die Spitze 12 ist in Figur 1 kurzliniert dargestellt.

In der Zunge 9 ist ein Hohlraum 16 angeordnet. In dem bevorzugten Ausführungsbeispiel ist der Hohlraum 16 oval ausgestaltet. Hierbei ist der Hohlraum 16 derart in die Zunge 9 eingebracht, daß dieser mit seinen Strömungs- und Gießtechnisch optimierten Enden 17 zum einen etwas in eine Wandung 6a und zum anderen in die Grundfläche 11 der Zunge 9 hineingeführt ist. In dem Hohlraum 16 ist ein Kühlmittel 18, vorzugsweise Natrium eingeschlossen. Der Verlauf des Hohlraums 16 mit dem eingeschlossenen Kühlmittel 18 ist in Figur 1 schraffiert dargestellt.

Das Kühlmittel 18 wird in den Hohlraum 16 gefüllt, bevor der Schneckenkanal 6 z. B. mittels Schweißen z. B. an der Auspuffkrümmereinlaßseite 5 verschlossen wird. Der Schneckenkanal 6 ist bevorzugt in etwa um dreiviertel des Gehäuseumfangs umlaufend angeordnet. Entsprechend ist die Zunge 9 mit dem Hohlraum 16 in dem Schneckenkanal 6 angeordnet. Aufgrund von Motorvibrationen wird das Kühlmittel 18 in dem Hohlraum 16 in Bewegung gehalten. Durch die Fließbewegung wird somit die Wärme von der Zunge 9 und der als "hot spot" ausgebildeten Spitze 12 der Zunge 9 zur Wandung 6a transportiert. Damit können dem Zwillingsstrom-Abgasturbolader 1 Abgase mit einer Abgastemperatur von ca. 1050°C zugeführt werden, so daß der erfindungsgemäße Abgasturbolader eine erhöhte Effizienz und Leistung aufweist.

## Patentansprüche

1. Abgasturbolader für Verbrennungsmotoren, der in seinem Gehäuse (4) eine Turbine und einen Schneckenkanal (6) hat, dem Abgasströme des Verbrennungsmotors im Abgaskrümmer gegenflutig zugeführt werden, wobei im Bereich der gegenflutigen Zuführung eine Zunge (9) zur Vermeidung einer Auslöschung von Abgasstromimpulsen angeordnet ist und in der Zunge ein Hohlraum derart ausgebildet ist, daß die Wärme von der Zunge (9) zu einer Wandung, transportiert wird und wobei in dem Hohlraum (16) ein Kühlmittel (18) eingeschlossen ist
**dadurch gekennzeichnet,**
**daß** eine Zunge (9) als Teil des Schneckenkanals (6) eines zweiflutigen Gehäuses (4) ausgebildet ist und die Zunge (9) und der Hohlraum (16) über in etwas die Hälfte oder drei-viertel des Gehäuseumfangs verläuft und die Abgasströme innerhalb der Turbine getrennt geführt werden.

2. Abgasturbolader nach Anspruch 1,
**dadurch gekennzeichnet, daß**
die Zunge (9) im Querschnitt gesehen eine pfeilspitzenartige Grundfläche (12) aufweist.

3. Abgasturbolader nach Anspruch 1 oder 2,
**dadurch gekennzeichnet, daß**
der Hohlraum (16) im Querschnitt gesehen oval ausgestaltet ist.

4. Abgasturbolader nach einem der vorhergehenden Ansprüche,
**dadurch gekennzeichnet, daß**
der Hohlraum (16) als Kühlmittelkanal ausgeführt ist.

5. Abgasturbolader nach einem der vorhergehenden Ansprüche,
**dadurch gekennzeichnet, daß**
als Kühlmittel (18) Natrium verwendet wird.

## Claims

1. Turbocharger for internal combustion engines which, in its housing (4), has a turbine and a spiral channel (6) to which exhaust gas flows of the internal combustion engine in the exhaust manifold are delivered in an opposing manner, a tongue (9) being arranged in the region of the opposing delivery for avoiding deletion of exhaust gas flow pulses and a cavity being configured in the tongue such that the heat from the tongue (9) is transported to a wall and a coolant (18) being enclosed in the cavity (16), **characterized in that** a tongue (9) is configured as a part of the spiral channel (6) of a twin-flow housing (4) and the tongue (9) and the cavity (16) extend over approximately half or three quarters of the housing periphery and the exhaust gas flows are guided separately within the turbine.

2. Turbocharger according to Claim 1, **characterized in that** the tongue (9), viewed in cross section, has an arrowhead-like base (12).

3. Turbocharger according to Claim 1 or 2, **characterized in that** the cavity (16), viewed in cross section, is of oval configuration.

4. Turbocharger according to one of the preceding claims, **characterized in that** the cavity (16) is designed as a coolant channel.

5. Turbocharger according to one of the preceding claims, **characterized in that** sodium is used as coolant (18).

## Revendications

1. Turbocompresseur à gaz d'échappement pour moteurs à combustion interne, lequel possède dans son boîtier (4) une turbine et un canal hélicoïdal (6), auquel sont acheminés les courants de gaz d'échappement du moteur à combustion interne à contre-flux dans le collecteur de gaz d'échappement, une languette (9) destinée à éviter une extinction d'impulsions de courant de gaz d'échappement étant disposée dans la zone de l'acheminement à contre-flux et un espace creux étant disposé dans la languette de telle sorte que la chaleur soit transportée de la languette (9) vers une paroi et un agent de refroidissement (18) étant inclus dans l'espace creux (16), **caractérisé en ce qu'**une languette (9) est réalisée sous la forme d'une partie du canal hélicoïdal (6) d'un boîtier à double flux (4) et la languette (9) ainsi que l'espace creux (16) s'étendent sur environ la moitié ou les trois quarts du pourtour du boîtier et les courants de gaz d'échappement sont guidés séparément à l'intérieur de la turbine.

2. Turbocompresseur à gaz d'échappement selon la revendication 1, **caractérisé en ce que** la languette (9), vue en section transversale, présente une surface de base (12) de type pointe de flèche.

3. Turbocompresseur à gaz d'échappement selon la revendication 1 ou 2, **caractérisé en ce que** l'espace creux (16), vu en section transversale, est de forme ovale.

4. Turbocompresseur à gaz d'échappement selon l'une des revendications précédentes, **caractérisé en ce que** l'espace creux (16) est réalisé sous la forme d'un canal pour agent de refroidissement.

5. Turbocompresseur à gaz d'échappement selon l'une des revendications précédentes, **caractérisé en ce que** l'agent de refroidissement (18) utilisé est du sodium.
